# FASCICULE DE BREVET EUROPEEN

(11) **EP 2 231 474 B1**
(45) Date de publication et mention de la délivrance du brevet: **16.03.2011**
(21) Numéro de dépôt: 08863015.7
(22) Date de dépôt: 01.12.2008
(51) Int. Cl.: B64D 15/04, B64D 33/02, B64C 21/04

(54) **NACELLE D'AERONEF COMPRENANT UN SYSTEME DE TRAITEMENT DU GIVRE OPTIMISE**
Triebwerksgondel mit einem optimierten EisbehandlungsSYSTEM
AIRCRAFT NACELLE INCLUDING AN OPTIMISED ICE TREATMENT SYSTEM

(30) Priorité: 03.12.2007 FR 0759493
(43) Date de publication de la demande: 29.09.2010
(73) Titulaire: Airbus Opérations SAS, 31060 Toulouse (FR)
(72) Inventeur: PORTE, Alain, F-31770 Colomiers (FR); CHENE, Gilles, F-31100 Toulouse (FR); HORMIERE, Arnaud, F-31100 Toulouse (FR)
(74) Mandataire: Fantin, Laurent
(86) Numéro de dépôt international: PCT/FR2008/052166
(87) Numéro de publication internationale: WO 2009/077690

(56) Documents cités:
- EP-A- 0 376 371
- EP-A- 1 225 126
- US-A- 5 088 277

## Description

La présente invention se rapporte à une nacelle d'aéronef comprenant un système de traitement du givre optimisé.

Les systèmes permettant d'éviter la formation et/ou l'accumulation de glace et/ou de givre sont divisés en deux grandes familles, les premiers appelés systèmes anti-givrants permettant de limiter la formation de la glace et/ou du givre, les seconds appelés systèmes dégivrants limitant l'accumulation de la glace et/ou du givre et agissant une fois la glace et/ou le givre formé. Pour la suite de la description, on entend par système ou procédé de traitement du givre, un système ou un procédé anti-givrant ou un système ou un procédé dégivrant.

La présente invention se rapporte plus particulièrement à un procédé de traitement du givre consistant à utiliser de l'air chaud prélevé au niveau du moteur et refoulé au niveau de la paroi interne des bords d'attaque.

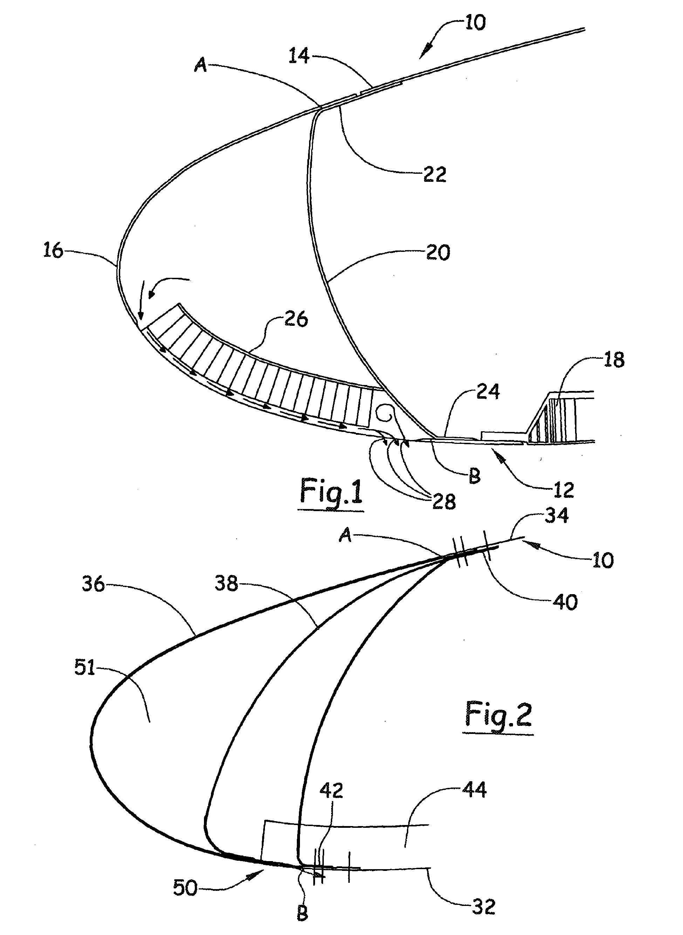

Selon un mode de réalisation illustré sur la figure 1, une nacelle 10 comprend au moins un conduit 12, une paroi périphérique 14, et à l'avant, une entrée d'air délimitée par une lèvre 16 qui relie le conduit 12 et la paroi périphérique 14.

De manière connue, le conduit 12 comporte un revêtement 18 pour le traitement acoustique comprenant de l'intérieur vers l'extérieur, une couche réflective, au moins une structure alvéolaire et au moins une structure acoustiquement résistive.

Pour assurer le fonctionnement de l'aéronef, le traitement du givre doit être opéré depuis un point A disposé au niveau de la paroi périphérique 14 jusqu'à un point B prévu au niveau du conduit 12. Un cadre avant 20 est prévu pour délimiter avec la lèvre un conduit d'air chaud circulaire au niveau de l'entrée d'air, ledit cadre avant comprenant une zone de jonction avec la paroi périphérique 22 au niveau du point A et une zone de jonction avec le conduit au niveau du point B. Selon un mode de réalisation, pour assurer la liaison entre le panneau formant la lèvre 16 et le panneau formant la paroi périphérique 14, les bords desdits panneaux sont plaqués puis fixés par tous moyens appropriés contre un rebord 22 du cadre avant 20.

Selon un mode de réalisation pour assurer la liaison entre le panneau formant la lèvre et un des panneaux délimitant le conduit 12, les bords desdits panneaux sont chevauchants et maintenus plaqués l'un contre l'autre par tous moyens appropriés. Comme illustré sur la figure 1, le cadre avant 20 comprend un rebord 24 contre lequel est plaquée et fixée par tous moyens appropriés la face intérieure du panneau de la lèvre.

Le cadre avant 20 et la lèvre 16 définissent un conduit avec une section en forme de D inversé qui s'étend sur toute la périphérie de la nacelle et dans lequel circule l'air chaud utilisé pour le traitement du givre. La position du cadre avant 20 dépend de la zone de traitement du givre qui s'étend entre les points A et B.

Cet agencement ne donne pas satisfaction pour les raisons suivantes :

Cette position du cadre avant 20 génère un conduit pour l'air chaud avec un volume important qui nécessite un débit important en air chaud au moment du dégivrage. Or, le traitement du givre peut être opéré au moment de certaines phases du vol lors desquelles la motorisation fonctionne avec un faible régime ne permettant pas de générer un débit d'air chaud suffisant pour optimiser le traitement du givre.

Selon un autre inconvénient, dans cette position, le cadre avant 20 est sensiblement perpendiculaire à la direction d'un impact d'oiseau. Aussi, pour résister à un tel impact, le cadre avant doit être renforcé par exemple en augmentant son épaisseur ou le nombre de renforts ce qui conduit à augmenter la masse embarquée et donc la consommation énergétique de l'aéronef.

Selon une autre contrainte, le système de traitement du givre doit être compatible avec un système pour le traitement acoustique.

De manière connue, un système de traitement acoustique comprend au niveau d'une paroi, de l'extérieur vers l'intérieur, une couche poreuse acoustiquement résistive, une structure alvéolaire et une couche réflectrice imperméable aux ondes sonores pour que le revêtement soit efficace.

Ce traitement acoustique doit être le plus étendu possible.

Dans le conduit prévu pour l'air chaud délimité par la lèvre 16 et le cadre avant 20, la surface intérieure de la lèvre peut comprendre un revêtement 26 pour le traitement acoustique. Selon un mode de réalisation décrit dans la demande de brevet FR-070055586, des canaux sont interposés entre la structure alvéolaire et la structure acoustiquement résistive du revêtement 26 pour le traitement acoustique.

Des moyens d'évacuation de l'air chaud sont prévus pour l'éjecter en dehors de la structure de la nacelle, dans le conduit 12, comme illustré sur la figure 1.

Selon un mode de réalisation, les moyens d'évacuation se présentent sous la forme de perforations ou de micro-perforations 28 ménagées au niveau de la paroi de la lèvre.

Selon un premier inconvénient de ce mode de réalisation, la surface de la zone occupée par les moyens d'évacuation non traitée sur le plan acoustique s'ajoute à la surface de la zone de jonction entre le cadre avant 20 et le conduit 12 également non traitée, ce qui ne permet pas d'optimiser le traitement acoustique. Selon un autre inconvénient, les micro-perforations dans la tôle métallique de la lèvre supportent peu la circulation traversante de l'air chaud qui tend à générer des phénomènes de microfissures réduisant considérablement la durée de vie de l'entrée d'air.

Enfin, selon une autre contrainte, la peau extérieure des revêtements pour le traitement acoustique étant en matériau composite sensible à la chaleur, les moyens d'évacuation doivent être positionnés de manière adéquate par rapport aux zones traitées sur le plan acoustique afin de limiter les risques de brûlures du composite.

Le document US-5088.277 décrit un autre mode de réalisation des moyens d'évacuation. Selon ce document, le cadre avant comprend en partie centrale une surface d'appui contre laquelle vient se plaquer la paroi formant la lèvre. Pour former les moyens d'évacuation, la paroi formant la lèvre comprend des renflements au niveau de la zone de jonction avec le cadre avant. Ainsi, au niveau des moyens d'évacuation, la paroi formant la lèvre est écartée du cadre avant pour laisser passer l'air chaud qui est évacué parallèlement à la surface du conduit. Selon ce mode de réalisation, la surface extérieure de la paroi formant le conduit vient dans le prolongement de la surface d'appui du cadre avant si bien qu'il existe un décalage entre la surface du conduit et la surface de la lèvre même dans les zones en dehors des renflements.

Ce mode de réalisation ne donne pas satisfaction pour les raisons suivantes :

Ces moyens d'évacuation génèrent d'importantes perturbations aérodynamiques sur le flux d'air circulant dans le conduit de la nacelle. En effet, les renflements constituent des formes en saillie par rapport aux surfaces du conduit et de la lèvre susceptibles de générer des perturbations aérodynamiques non admissibles pour la motorisation ou la soufflante disposées en aval.

Ces perturbations sont d'autant plus gênantes que le système de dégivrage a un fonctionnement ponctuel alors que les renflements perturbent continuellement le flux d'air circulant dans le conduit de la nacelle.

Selon un autre inconvénient, le décalage entre la surface du conduit et la surface de la lèvre conduit à un défaut de surface générant également des perturbations aérodynamiques.

Enfin, le flux d'air chaud étant évacué parallèlement à la surface du conduit, il risque de brûler les matériaux composites utilisés pour le traitement acoustique de la surface du conduit. Aussi, comme illustré dans le document US-5.088.277, le revêtement pour le traitement acoustique est écarté des moyens d'évacuation ce qui tend à réduire la surface traitée sur le plan acoustique. On trouve un autre exemple dans le document EPO376371.

Aussi, la présente invention vise à pallier aux inconvénients de l'art antérieur en proposant une nacelle incorporant un système de traitement du givre optimisé, compatible avec un traitement acoustique.

A cet effet, l'invention a pour objet une nacelle d'aéronef selon la revendication 1.

D'autres caractéristiques et avantages ressortiront de la description qui va suivre de l'invention, description donnée à titre d' exemple uniquement, en regard des dessins annexés sur lesquels :
- la figure 1 est une coupe de l'avant d'une nacelle selon l'art antérieur,
- la figure 2 est une coupe de l'avant d'une nacelle montrant la position du cadre avant selon l'art antérieur et selon l'invention ainsi que les limites du dégivrage et des zones traitées sur le plan acoustique,
- la figure 3 est une coupe illustrant en détails le système d'évacuation d'air chaud selon l'invention,
- la figure 4 est une vue en perspective illustrant une cale du système d'évacuation selon l'invention,
- la figure 5 est une vue en perspective de la cale de la figure 5 rapportée sur le panneau formant la lèvre,
- la figure 6 est une vue en perspective illustrant la cale de la figure 5 illustrant les orifices de sortie du système d'évacuation,
- la figure 7 est une vue en perspective d'une cale selon une autre variante,
- la figure 8 est une vue en perspective illustrant la cale de la figure 7 rapportée sur le panneau formant la lèvre,
- la figure 9 est une vue en perspective d'une cale selon une autre variante de l'invention,
- la figure 10 est une vue en perspective d'une cale selon une autre variante de l'invention,
- la figure 11 est une vue latérale de la cale de la figure 10,
- les figures 12 à 14 sont des coupes illustrant différentes variantes d'un système d'évacuation selon l'invention sans cale,
- la figure 15 est une coupe illustrant une variante de l'invention avec deux jonctions successives d'une part entre un panneau formant la lèvre et une cale et d'autre part entre ladite cale et un panneau formant le conduit, et
- les figures 16 et 17 sont des coupes illustrant des variantes du système d'évacuation selon l'invention avec des rondelles interposées entre deux panneaux au niveau de la zone de jonction.

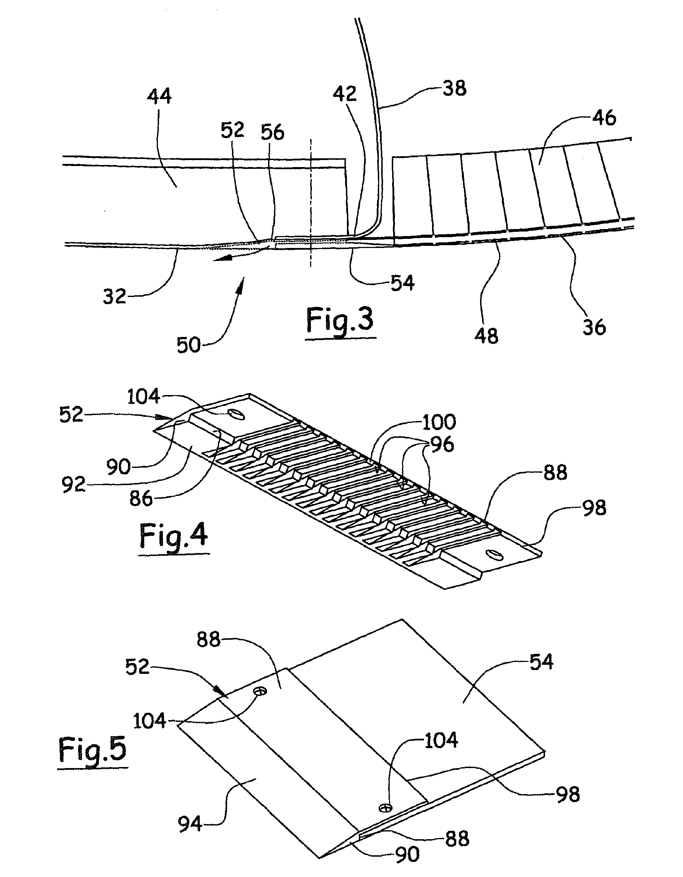

Sur les figures 2 et 3, on a représenté en 30 une nacelle comprenant un conduit 32, une paroi périphérique 34 ainsi qu'une lèvre 36 à l'avant reliant ledit conduit 32 et ladite paroi périphérique 34 et délimitant une entrée d'air. Les autres éléments de la nacelle ne sont pas décrits car ils sont connus de l'homme du métier.

Généralement, la paroi du conduit (ou de la lèvre) est obtenue par l'assemblage de plusieurs panneaux, de plusieurs plaques, de plusieurs peaux ou analogues. Pour la suite de la description, toutes ces formes de paroi seront désignées par le terme panneau.

La structure de la nacelle 30 comprend un cadre avant 38 reliant la paroi périphérique 34 et le conduit 32, et supportant la lèvre 36.

Le cadre avant 38 comprend un premier bord disposé au niveau de la jonction de la paroi périphérique 34 et de la lèvre 36 et un second bord disposé au niveau de la jonction du conduit 32 et de la lèvre 36.

Au niveau du premier bord, le cadre avant 38 comprend une surface d'appui 40 au niveau de laquelle sont solidarisées la paroi périphérique 34 et/ou la lèvre 36. Selon un mode de réalisation, pour réduire l'influence sur la trainée, les panneaux de la surface périphérique et de la lèvre sont mis bout à bout et ne se chevauchent pas et sont tous les deux solidarisés à la surface d'appui 40.

Au niveau du second bord, le cadre avant 38 comprend une surface d'appui 42 au niveau de laquelle sont solidarisés le conduit 32 et/ou la lèvre 36.

Selon un mode de réalisation, la paroi de la lèvre 36 est solidarisée à la surface d'appui 42 et les extrémités des parois du conduit et de la lèvre en vis-à-vis se chevauchent et sont solidarisées par tous moyens appropriés. Pour réduire l'influence sur la traînée, le panneau du conduit (ou le panneau de la lèvre) comprend un décrochement dont la hauteur est adaptée à l'épaisseur du panneau de la lèvre (ou respectivement du panneau du conduit) afin que les surfaces aérodynamiques des deux panneaux de part et d'autre de la zone de chevauchement soient disposées dans le même plan.

De manière générale, on appelle une zone de jonction, une zone au niveau de laquelle deux éléments et plus particulièrement deux panneaux ou parties de panneaux sont superposés. La présente invention traite plus particulièrement des zones de jonction entre deux éléments comportant chacun une surface formant la surface extérieure de la nacelle de part et d'autre de la zone de jonction. Pour la suite de la description, on entend par intérieur de la nacelle la zone de la nacelle délimitée par la paroi périphérique, la lèvre et le conduit qui n'est pas en contact avec les flux aérodynamiques s'écoulant à l'extérieur de l'aéronef, l'extérieur de la nacelle correspondant à la zone complémentaire au niveau de laquelle circulent les flux aérodynamiques à savoir ceux en contact avec la surface extérieure de la paroi périphérique ou avec la surface extérieure du conduit à l'intérieur duquel s'écoule la veine d'air destinée à la turbomachine. Afin de réduire les nuisances sonores, le conduit 32 comprend un revêtement 44 pour le traitement acoustique, comportant de l'intérieur vers l'extérieur, une couche réflectrice, au moins une structure alvéolaire et au moins une structure acoustiquement résistive. Le revêtement pour le traitement acoustique n'est pas détaillé car il est également connu de l'homme du métier. Généralement, la structure acoustiquement résistive formant la surface aérodynamique est en matériau composite.

Pour améliorer le traitement acoustique, la lèvre peut comprendre également un revêtement acoustique 46.

Les zones de jonction d'une part entre le cadre avant et la lèvre, et d'autre part, entre la lèvre et le conduit sont des zones qui ne sont pas traitées sur le plan acoustique en raison du chevauchement desdits éléments.

La nacelle comprend également un système de traitement du givre au niveau de la lèvre 36 qui doit couvrir une zone qui s'étend selon une section longitudinale d'un point A prévu au niveau de la paroi périphérique 34 à un point B prévu au niveau du conduit 32.

La présente invention se rapporte plus particulièrement au nacelle intégrant un système de traitement du givre par air chaud. Dans ce cas, des moyens sont prévus pour insuffler de l'air chaud à l'intérieur de la lèvre afin que ce dernier en contact avec la surface intérieure de la lèvre empêche la formation de givre ou son accumulation au niveau de la surface extérieure de la lèvre.

Selon un mode de réalisation, l'air chaud est prélevé au niveau de la motorisation et des canalisations sont prévues pour l'acheminer dans l'espace délimité par le cadre avant et la lèvre. Ces différents éléments ne sont pas plus décrits car ils sont connus de l'homme du métier.

Avantageusement, des moyens sont prévus pour canaliser l'air chaud à proximité de la surface intérieure de la lèvre afin de renforcer l'efficacité du traitement du givre. Selon un mode de réalisation décrit dans la demande de brevet FR-070055586, des canaux 48 sont interposés entre la structure alvéolaire et la structure acoustiquement résistive du revêtement pour le traitement acoustique.

La nacelle comprend des moyens permettant d'évacuer l'air chaud utilisé pour le traitement du givre à l'extérieur de ladite nacelle.

Selon l'invention, la zone de jonction du cadre avant 38 avec la lèvre 36 e/ou le conduit (32) au niveau de l'entrée d'air de la nacelle est décalée vers l'avant de la nacelle par rapport au point B, et des conduits 50 sont prévus au niveau de la face intérieure de la lèvre 36 et du conduit 32 pour acheminer l'air chaud depuis le conduit 51 pour l'air chaud délimité par la lèvre 36 et le cadre avant 38 jusqu'à des sorties disposées au niveau d'un cercle correspondant au point B sur la coupe de la figure 2.

Ces conduits 50 s'étendent au-delà de la zone de jonction entre d'une part le cadre avant 38, et d'autre part la lèvre 36 et/ou le conduit 32 de manière à ce que la zone de traitement du givre aille au-delà de la zone de jonction contrairement à la solution proposée par le document US-5.088.277. De plus, dans la mesure où ils sont disposés au niveau de la surface intérieure, ils ne génèrent aucune protubérance dans le conduit 32 susceptible de perturber les écoulements aérodynamiques comme la solution proposée par le document US-5.088.277.

Ces conduits 50 sont délimités par au moins une cloison, par exemple une cale comme cela sera expliqué ultérieurement, qui isole l'air chaud du revêtement 44 pour le traitement acoustique. Cette solution permet d'isoler l'air chaud des cellules de la structure alvéolaire. Ainsi le traitement acoustique n'est pas perturbé par l'air chaud. De préférence, ladite au moins une cloison est en un matériau résistant à la chaleur et permet d'isoler l'air chaud du revêtement pour le traitement acoustique qui peut être en matériau composite pour réduire la masse embarquée.

Selon un autre avantage de l'invention, le fait de décaler la zone de jonction entre d'une part le cadre avant 38, et d'autre part la lèvre 36 et/ou le conduit 32 vers l'avant de la nacelle permet de réduire le volume du conduit 51 et donc le débit nécessaire en air chaud. Ainsi, cet agencement permet d'optimiser le traitement du givre intervenant lors de certaines phases du vol lors desquelles la motorisations fonctionne à faible régime et ne délivre qu'un débit réduit d'air chaud.

Selon un autre avantage, selon cet agencement, le cadre avant est plus incliné par rapport à l'art antérieur ce qui renforce sa résistance aux chocs d'oiseaux, contribuant ainsi à optimiser sa masse.

Selon l'invention, ces conduits 50 d'évacuation de l'air chaud sont prévus au niveau de la zone de jonction et sont intercalés entre deux éléments formant la zone de jonction.

Selon une caractéristique importante de l'invention, les conduits 50 ont des formes adaptées permettant d'éjecter l'air chaud selon une direction non parallèle à la surface extérieure de la nacelle afin de le mélanger avec les flux aérodynamiques circulant dans le conduit et de le refroidir.

Avantageusement, la direction du flux d'air chaud éjecté forme un angle avec la surface extérieure variant de 5 à 60°. De préférence, l'angle est compris entre 5 et 30° pour obtenir un bon compromis entre le refroidissement de l'air chaud et les perturbations du flux aérodynamique circulant dans le conduit.

Selon un point important de l'invention, l'élément disposé à l'intérieur au niveau de la zone de jonction comprend un pan incliné entre la zone au niveau de laquelle la surface extérieure dudit élément est plaquée contre la surface intérieure de l'autre élément et la zone au niveau de laquelle la surface extérieure dudit élément forme la surface extérieure de la nacelle, ledit pan incliné permettant d'orienter le flux d'air chaud selon une direction non parallèle à la surface extérieure de la nacelle.

Selon un mode de réalisation, les conduits 50 sont prévus sur toute la circonférence du conduit de la nacelle, ou selon une ou plusieurs portions de circonférence.

Selon un mode de réalisation amélioré, l'angle d'éjection de l'air chaud peut ne pas être constant le long de la circonférence. Ainsi, en fonction de la position des moyens d'évacuation sur la circonférence du conduit, l'angle d'éjection peut être optimisé.

Selon un mode de réalisation, les conduits 50 sont délimités par au moins une cale 52 avec au moins un élément en saillie et/ou en creux disposé entre les deux éléments de la zone de jonction.

Selon un mode de réalisation préféré, la cale 52 comprend une portion intercalée entre le panneau 54 de la lèvre 36 et le panneau 56 du conduit 32, la surface d'appui 42 du cadre avant 38 étant disposée au droit de la zone de chevauchement desdits panneaux 54 et 56, comme illustré en détails sur la figure 3.

Cette configuration permet d'améliorer encore le traitement acoustique car les zones de jonction entre le cadre avant 38, la lèvre 36, le conduit 32 et les conduits 50 sont superposés, ce qui réduit encore les surfaces non traitées. Selon un autre avantage, le système d'évacuation ne comprend plus de perforations ou de micro-perforations ce qui contribue à augmenter nettement sa durée de vie du fait qu'il n'y ait plus de risques possibles de déchirement sous la pression pneumatique.

Cette configuration a aussi pour avantage d'inciter l'air à s'évacuer par ce système d'évacuation ce qui améliore grandement le dégivrage de la lèvre.

Avantageusement, la cale 52 comprend une première portion 58 intercalée entre les panneaux superposés et une seconde portion 60 au droit d'un seul panneau, celui disposé à l'intérieur au niveau de la zone de jonction, correspondant au panneau du conduit 32. Cette configuration permet de protéger le panneau formant le conduit 32 réalisé généralement au moins en partie en matériau composite.

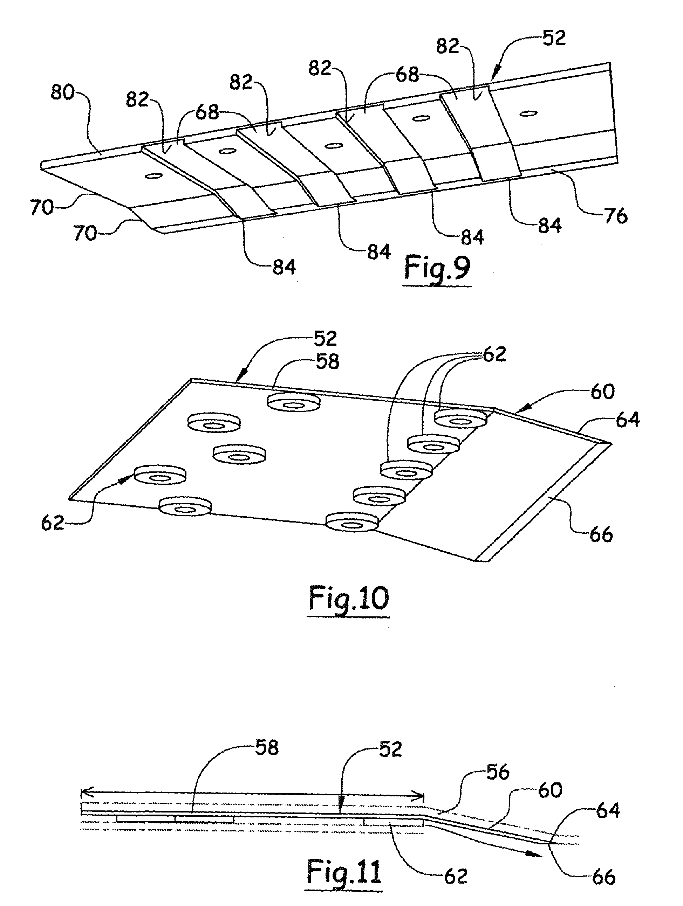

Selon une première variante illustrée sur les figures 10 et 11, la cale 52 comprend des plots 62 prévus au niveau d'au moins une des faces de la cale, constituant des éléments en saillie autorisant le passage de l'air chaud depuis l'intérieur vers l'extérieur. Avantageusement, selon ce mode de réalisation, la cale 52 comprend une première portion 58 au niveau de laquelle sont rapportés les plots 62, intercalée entre les panneaux 54 et 56, et une seconde portion 60 en contact uniquement avec le panneau 56 du conduit 32. Les plots 62 sont disposés sur la face de la cale 52 en regard du panneau 54 de la lèvre afin que l'air chaud soit en contact seulement avec ledit panneau 54 afin de prolonger le traitement du givre et de protéger le panneau 56 du conduit intérieur réalisé généralement au moins en partie en matériau composite sensible à la chaleur. Avantageusement, la seconde portion 60 est inclinée par rapport à la première partie 58 de manière à ce que l'extrémité libre 64 de la seconde portion 60 soit disposée au niveau de la surface aérodynamique des panneaux formant la lèvre et le conduit. De préférence, l'extrémité libre 64 comprend une forme en biseau de manière à obtenir un chant 66 dont la surface est disposée au niveau de la surface aérodynamique des panneaux formant la lèvre et le conduit 32.

La seconde portion 60 inclinée permet d'éjecter l'air chaud à l'extérieur de la nacelle avec une incidence de manière à ce qu'il se mélange avec les écoulements aérodynamiques circulant dans le conduit et qu'il se refroidisse.

Pour assurer le passage de l'air chaud, la première portion 58 s'étend sur toute la longueur L de la zone de superposition des panneaux 54 et 56.

Selon une autre variante illustrée sur les figures 4 à 9, la cale 52 comprend au moins une rainure 68 sur au moins l'une ses faces permettant le passage de l'air chaud depuis l'intérieur de la nacelle vers l'extérieur.

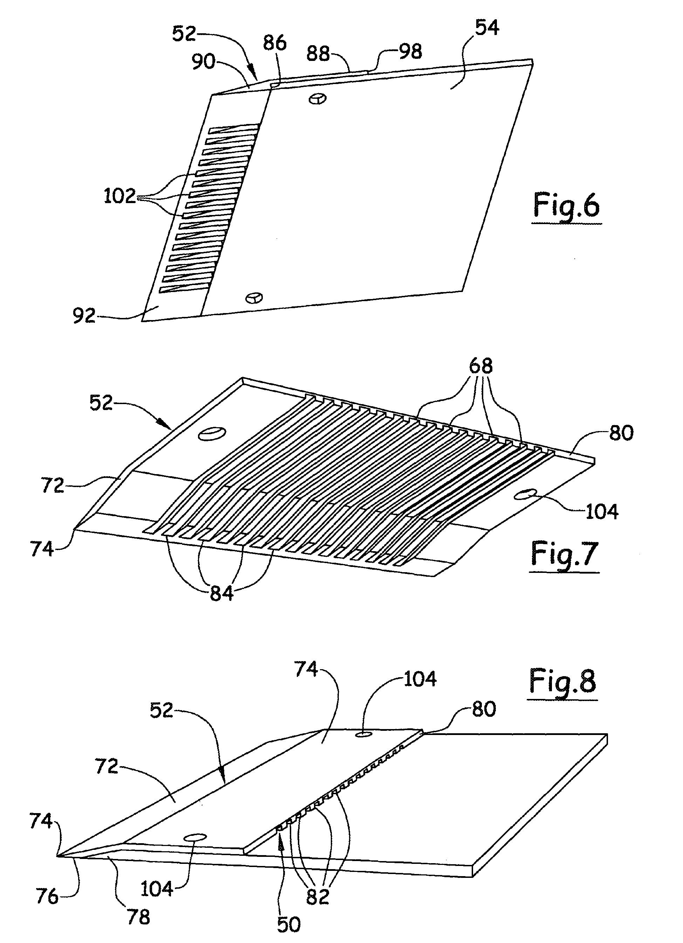

Selon un mode de réalisation illustré sur les figures 7 à 9, la cale 52 comprend une première portion 70, intercalée entre les panneaux 54 et 56, s'étendant au moins sur la longueur de la zone de superposition desdits panneaux 54 et 56, et une seconde portion 72 inclinée par rapport à la première portion 70 de manière à ce que l'extrémité libre 74 de la seconde portion 72 soit disposée au niveau de la surface aérodynamique des panneaux 54 et 56 formant la lèvre et le conduit 32.

De préférence, l'extrémité libre 74 comprend une forme en biseau de manière à obtenir un chant 76 dont la surface est disposée au niveau de la surface aérodynamique des panneaux formant la lèvre et le conduit 32.

De préférence, le panneau 54 de la lèvre 36 comprend une extrémité 78 avec une forme en biseau de manière à obtenir un chant dont la surface est parallèle à la surface de la seconde portion 72 de la plaque 52.

La cale 52 comprend des rainures 68 seulement au niveau de la face en regard du panneau 54 de la lèvre 36. Ainsi, l'air chaud est canalisé entre la cale 52 et le panneau 54 de la lèvre 36, ce qui permet de protéger le panneau 56 du conduit 32 réalisé généralement au moins en partie en matériau composite sensible à la chaleur.

Les rainures 68 peuvent avoir une largeur plus ou moins importante, comme illustré sur les figures 7 et 9.

Les rainures 68 ont une hauteur inférieure à l'épaisseur de la plaque 52 et s'étendent depuis un premier chant 80 jusqu'au second chant 76.

Ainsi, les rainures 68 débouchent d'une part au niveau du chant 80 via des orifices 82 qui communiquent avec l'intérieur de la nacelle, et d'autre part, au niveau du chant 76 via des orifices 84 qui communiquent avec l'extérieur de la nacelle.

La seconde portion étant inclinée, le fond des rainures 68 est également incliné au niveau de ladite seconde partie, ce qui permet à l'air chaud d'être éjecté à l'extérieur de la nacelle avec une incidence de manière à ce qu'il se mélange avec les écoulements aérodynamiques circulant dans le conduit et qu'il se refroidisse. Selon un autre mode de réalisation illustré sur les figures 4 à 6, la plaque ou cale 52 comprend un épaulement 86, de hauteur sensiblement égale à l'épaisseur du panneau 54 de la lèvre, qui délimite une première portion 88 sous forme d'une plaque de faible épaisseur intercalée entre les deux panneaux 54 et 56, s'étendant au moins sur la longueur de la zone de superposition desdits panneaux 54 et 56, et une seconde portion 90 en forme de biseau avec un chant 92 dont la surface est disposée au niveau de la surface aérodynamique des panneaux formant la lèvre et le conduit intérieur et un pan incliné 94 contre lequel est plaqué le panneau 56 du conduit 32.

La cale 52 comprend des rainures 96 seulement au niveau de la face en regard du panneau 54 de la lèvre 36. Ainsi, l'air chaud est canalisé entre la cale 52 et le panneau 54 de la lèvre 36, ce qui permet de protéger le panneau 56 du conduit 32 réalisé généralement au moins en partie en matériau composite sensible à la chaleur.

Les rainures 96 peuvent avoir une largeur plus ou moins importante.

Les rainures 96 ont une hauteur inférieure à l'épaisseur de la plaque 52 et s'étendent depuis un premier chant 98 jusqu'au second chant 92.

Ainsi, les rainures 96 débouchent d'une part au niveau du chant 98 via des orifices 100 qui communiquent avec l'intérieur de la nacelle, et d'autre part, au niveau du chant 92 via des orifices 102 qui communiquent avec l'extérieur de la nacelle.

Comme précédemment, la seconde portion étant inclinée, le fond des rainures 68 est également incliné au niveau de ladite seconde partie, ce qui permet à l'air chaud d'être éjecté à l'extérieur de la nacelle avec une incidence de à ce qu'il se mélange avec les écoulements aérodynamiques circulant dans le conduit et qu'il se refroidisse.

Selon les différentes variantes, les plaques ou cales 52 sont maintenues en place par tous moyens appropriés. Selon un mode de réalisation, des orifices 104 peuvent être prévus pour permettre le passage de vis ou de rivets.

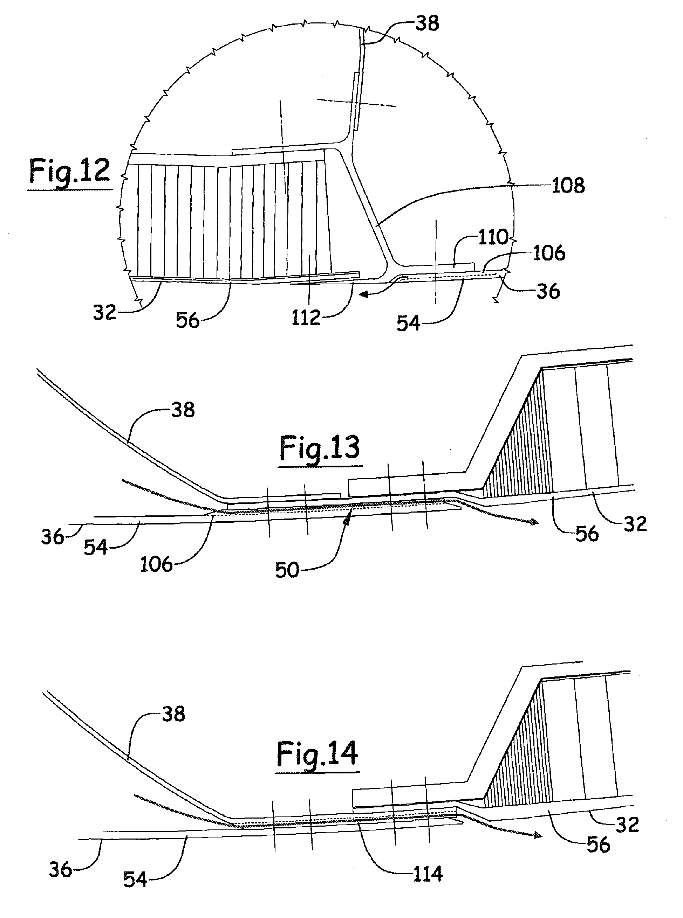

Sur les figures 12 et 13, les conduits 50 sont délimités par des formes en saillie et/ou en creux 106 réalisées directement sur le panneau 54 formant la lèvre 36. Selon un mode de réalisation, la surface intérieure du panneau 54 comprend des rainures 106 qui s'étendent sur toute la zone de jonction et qui communiquent à une première extrémité avec l'intérieur de la nacelle et à une seconde extrémité avec l'extérieur de la nacelle.

Selon un mode de réalisation illustré sur la figure 13, le panneau 56 se prolonge entre le cadre avant 38 et le panneau 54 formant la lèvre au niveau de la zone de jonction.

Selon un autre mode de réalisation illustré sur la figure 12, une pièce intermédiaire 108 est prévue pour relier le panneau 54 formant la lèvre, le panneau 56 formant le conduit 32 et le cadre avant 38. Cette pièce intermédiaire 108 comprend deux branches, une première branche 110 plaquée contre la surface intérieure du panneau 54 formant la lèvre 36 et une seconde branche 112 plaquée contre la surface extérieure du panneau 56 formant le conduit 32. Selon cette variante, les conduits 50 sont disposés entre le panneau 56 et la pièce intermédiaire 108. Selon les cas, les formes en saillie et/ou en creux peuvent être réalisées au niveau de la surface de la branche 110 de la pièce intermédiaire 108 en contact avec la surface intérieure du panneau 54 et/ou lesdites formes peuvent être réalisées au niveau de la surface intérieure du panneau 54 en contact avec la branche 110 de la pièce intermédiaire 108. Selon une autre variante illustrée sur la figure 104, le cadre avant 38 se prolonge entre le panneau 54 formant la lèvre 36 et le panneau 56 formant le conduit 32. Selon un mode de réalisation, les conduits 50 sont délimités par des formes en saillie et/ou en creux 114 directement réalisées au niveau de la surface du cadre avant 38 en contact avec le panneau 54, lesdites formes en creux et/ou en saillie s'étendant sur une longueur suffisante pour faire communiquer l'intérieur de la nacelle, notamment la zone délimitée par le cadre avant et la lèvre, avec l'extérieur de la nacelle.

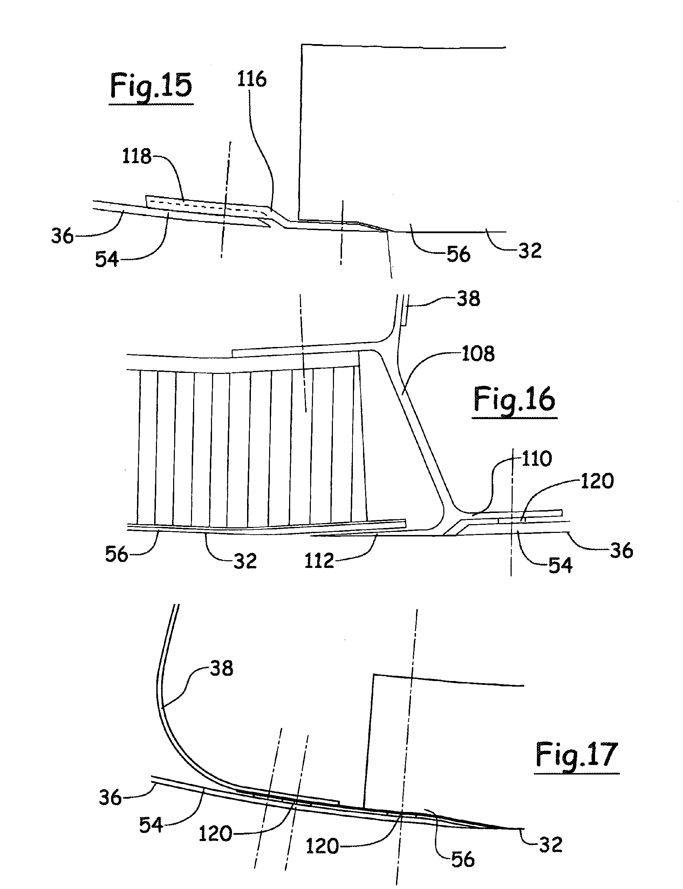

Sur la figure 15, on a représenté une autre variante, dans laquelle une tôle ou un plaque 116 assure la jonction entre le panneau 54 formant la lèvre 36 et le panneau 56 formant le conduit 32. Ainsi, ce mode de réalisation comprend une première zone de jonction entre le panneau 54 et la plaque 116 et une seconde zone de jonction entre la plaque 116 et le panneau 56. Selon un mode de réalisation, les conduits 50 sont délimités par des formes en saillie et/ou en creux 118 interposées entre le panneau 54 et la plaque 116. Selon les cas, les formes en saillie et/ou en creux 118 sont ménagées au niveau de la surface de la plaque 116 en contact avec le panneau 54, ou au niveau de la surface intérieure du panneau 54 en contact avec la plaque 116.

Selon d'autres modes de réalisation illustrés sur les figures 16 et 17, les conduits 50 sont formés à partir d'une pluralité d'éléments 120 disposés entre les éléments d'une zone de jonction, notamment sous forme de rondelles.

Ainsi, comme illustré sur la figure 16, les rondelles 120 sont interposées entre la branche 110 d'une pièce intermédiaire 108 et le panneau 54 de la lèvre 36. Comme illustré sur la figure 17, les rondelles 120 sont interposées entre le cadre avant 38 et le panneau 54 formant la lèvre 36 et entre le panneau 56 formant le conduit 32 et le panneau 54 formant la lèvre 36.

Bien entendu, l'invention n'est pas limitée aux modes de réalisation illustrés sur les différentes figures, les formes en saillies et/ou en creux des moyens d'évacuation étant prévues directement sur au moins l'une des pièces formant la zone de jonction et/ou sur une pièce intercalaire, appelée cale, disposée entre les deux pièces formant la zone de jonction.

## Revendications

1. Nacelle d'aéronef comprenant un panneau (56) formant un conduit (32), une paroi périphérique (34), un panneau (54) formant une lèvre (36) à l'avant reliant ledit conduit (32) et ladite paroi périphérique (34) et délimitant une entrée d'air, lesdits panneaux (54, 56) se superposant au niveau d'une zone de jonction, ainsi qu'un système de traitement du givre traitant une zone qui s'étend selon une section longitudinale d'un point A prévu au niveau de la paroi périphérique (34) à un point B prévu au niveau du conduit (32) et comportant un cadre avant (38) délimitant avec ladite lèvre (36) un conduit (51) dans lequel circule de l'air chaud pour le dégivrage où le cadre avant (38) comprend une zone de jonction avec la lèvre (36) et/ou le conduit (32) décalée vers l'avant de la nacelle par rapport au point B, des conduits (50) étant prévus au niveau de la face intérieure de la lèvre (36) et du conduit (32) pour acheminer l'air chaud depuis ledit conduit (51) pour l'air chaud jusqu'à des sorties disposées au niveau d'un cercle correspondant au point B, lesdits conduits (50) s'étendant au-delà de la zone de jonction entre d'une part le cadre avant (38), et d'autre part la lèvre (36) et/ou le conduit (32) et en ce que lesdits conduits (50) sont délimités par au moins une cloison, **caractérisée en ce que** ledit conduit (32) comprenant un revêtement (44) pour le traitement acoustique, comportant de l'intérieur vers l'extérieur, une couche réflectrice, au moins une structure alvéolaire et au moins une structure acoustiquement résistive, et ledit cloison se présente sous la forme d'une cale (52) en deux parties, une première partie (58, 70, 88) intercalée entre lesdits panneaux (54, 56) superposés qui comporte au moins un élément en saillie et/ou en creux permettant de ménager des conduits (50) entre lesdits panneaux afin de faire communiquer l'intérieur et l'extérieur de la nacelle et une seconde partie (60, 72, 90) au droit d'un seul panneau, celui disposé à l'intérieur au niveau de la zone de jonction, afin de le protéger d'une température excessive et d'isoler l'air chaud du revêtement (44) pour le traitement acoustique.

2. Nacelle d'aéronef selon la revendication 1, **caractérisée en ce que** ladite au moins une cloison est en un matériau résistant à la chaleur et permet d'isoler l'air chaud du revêtement pour le traitement acoustique réalisé en matériau composite.

3. Nacelle d'aéronef selon la revendication 1 ou 2, **caractérisée en ce que** la cale (52) comprend au moins une rainure (68, 96) sur au moins l'une de ses faces permettant de délimiter un conduit (50).

4. Nacelle d'aéronef selon la revendication 3, **caractérisée en ce que** les rainures (68,96) débouchent d'une part au niveau d'un premier chant (80, 98) via des orifices (82, 100) qui communiquent avec le conduit (51), et d'autre part, au niveau d'un second chant (76, 92) via des orifices (84, 102) qui communiquent avec l'extérieur de la nacelle.

5. Nacelle d'aéronef selon la revendication 3 ou 4, **caractérisée en ce que** la cale (52) comprend un épaulement (86), de hauteur sensiblement égale à l'épaisseur d'un premier panneau (54), qui délimite une première partie (88) sous forme d'une plaque de faible épaisseur intercalée entre les deux panneaux (54, 56), s'étendant au moins sur la longueur de la zone de superposition desdits panneaux (54, 56), et une seconde partie (90) en forme de biseau avec un chant (92) dont la surface est disposée au niveau de la surface aérodynamique desdits panneaux (54, 56) et un pan incliné (94) contre lequel est plaqué le second panneau (56) et **en ce que** la cale (52) comprend des rainures (96) seulement au niveau de la face en regard du premier panneau (54).

## Claims

1. Aircraft nacelle that comprises a panel (56) that forms a pipe (32), a peripheral wall (34), a panel (54) that forms a lip (36) toward the front that connects said pipe (32) and said peripheral wall (34) and that delimits an air intake, said panels (54, 56) being superposed at a junction zone as well as a frost treatment system that treats a zone that extends along a longitudinal section of a point A that is provided at the peripheral wall (34) at a point B that is provided at the pipe (32) and that comprises a front frame (38) that delimits with said lip (36) a pipe (51) in which the hot air for de-icing circulates, said pipe (32) comprising a coating (44) for the acoustic treatment, comprising - from the inside to the outside - a reflective layer, at least one alveolar structure, and at least one acoustically resistive structure, the front frame (38) comprising a junction zone with the lip (36) and/or the pipe (32) that is offset toward the front of the nacelle relative to point B, pipes (50) being provided at the inside surface of the lip (36) and the pipe (32) for conveying the hot air from said pipe (51) for hot air up to discharges that are arranged at a circle that corresponds to point B, said pipes (50) extending beyond the junction zone between, on the one hand, the front frame (38), and, on the other hand, the lip (36) and/or the pipe (32) and being delimited by at least one partition wherein said pipe (32) comprising a coating (44) for the acoustic treatment, comprising - from the inside to the outside - a reflective layer, at least one alveolar structure, and at least one acoustically resistive structure and said at least one partition comes in the form of a two-part block (52), a first part (58, 70, 88) that is inserted between the superposed panels (54, 56) and that comprises at least one projecting and/or hollow element that makes it possible to provide pipes (50) between said panels so as to link the inside and the outside of the nacelle, and a second part (60, 72, 90) to the right of a single panel, the latter arranged inside at the level of the junction zone so as to protect it from an excessive temperature and to isolate the hot air from the coating (44) for the acoustic treatment.

2. Aircraft nacelle according to claim 1, wherein said at least one partition is made of a heat-resistant material and makes it possible to isolate the hot air from the coating for the acoustic treatment that is made of composite material.

3. Aircraft nacelle according to claim 1 or 2, wherein the block (52) comprises at least one groove (68, 96) on at least one of its surfaces that makes it possible to delimit a pipe (50).

4. Aircraft nacelle according to claim 3, wherein the grooves (68, 96) emerge, on the one hand, at a first edge (80, 98) via ports (82, 100) that communicate with the pipe (51), and, on the other hand, at a second edge (76, 92) via ports (84, 102) that communicate with the outside of the nacelle.

5. Aircraft nacelle according to claim 3 or 4, wherein the block (52) comprises a shoulder (86) with a height that is approximately equal to the thickness of a first panel (54), which delimits a first part (88) in the form of a thin plate that is inserted between the two panels (54, 56), expending at least over the length of the superposition zone of said panels (54, 56), and a second beveled-shape part (90) with an edge (92) whose surface is arranged at the aerodynamic surface of said panels (54, 56) and an inclined face (94) against which the second panel (56) is flattened, and wherein the block (52) comprises grooves (96) only at the surface opposite the first panel (54).

## Patentansprüche

1. Gondel eines Flugzeugs umfassend ein Paneel (56), das einen Kanal (32) bildet, eine Umfangswand (34), ein Paneel (54), das einen eine Lippe (36) bildet, welche den Kanal (32) und die Umfangswand (34) verbindet und einen Lufteinlass umgrenzt, wobei die Paneele (54, 56) sich in Höhe eines Verbindungsbereichs überlappen, sowie ein Eisbehandlungssystem, das einen Bereich behandelt, der sich entlang einem Längsabschnitt von einem im Bereich der umfangwand (34) vorgesehenen Punkt A bis zu einem im Bereich des Kanals (32) vorgesehenen Punkt B erstreckt, und das einen vorderen Rahmen (38) umfasst, der mit der Lippe (36) einen Kanal (51) umgrenzt, in dem Heißluft für die Enteisung strömt, wobei der vordere Rahmen (38) einen Bereich zur Verbindung mit der Lippe (36) und/oder dem Kanal (32) umfasst, der gegenüber dem Punkt B zum vorderen Teil der Gondel versetzt ist, wobei Kanäle (50) im Bereich der Innenseite der Lippe (36) und des Kanals (32) vorgesehen sind, um die Heißluft von dem Kanal (51) für Heißluft bis zu Auslässen zu befördern, die im Bereich eines dem Punkt B entsprechenden Kreises angeordnet sind, wobei die Kanäle (50) sich jenseits des Verbindungsbereichs zwischen einerseits dem vorderen Rahmen (38) und andererseits der Lippe (36) und/oder dem Kanal (32) erstecken und wobei die Kanäle (50) durch wenigstens eine Trennwand begrenzt sind, **dadurch gekennzeichnet, dass** der Kanal (32) eine Beschichtung (44) für den Schallschutz aufweist, welche von innen nach außen eine reflektierende Schicht, wenigstens eine Wabenstruktur und wenigstens eine schallwiderstandsfähige Struktur umfasst, und dass die Trennwand in Form einer Abstützung (52) aus zwei Teilen vorliegt, einem zwischen den übereinander liegenden Paneelen (54, 56) angeordneten ersten Teil (58, 70, 88), der wenigstens ein vorspringendes und/oder hohles Element umfasst, das ermöglicht, Kanäle (50) zwischen den Paneelen auszubilden, um das Innere und das Äußere der Gondel miteinander zu verbinden, und einem zweiten Teil (60, 72, 90) gegenüber einem einzigen Paneel, demjenigen, das in Höhe des Verbindungsbereichs innen angeordnet ist, um es vor einer übermäßigen Temperatur zu schützen und um die Heißluft von der Schallschutzbeschichtung (44) zu trennen.

2. Gondel eines Flugzeugs nach Anspruch 1, **dadurch** gekenntzeichnet, dass die wenigstens eine Trennwand aus einem hitzebeständigen Material besteht und ermöglicht, die Heißluft von der aus Verbundwerkstoff bestehenden Schallschutzbeschichtung zu trennen.

3. Gondel eines Flugzeugs nach Anspruch 1 oder 2, **dadurch gekennzeichnet, dass** die Abstützung (52) wenigstens eine Nut (68, 96) auf wenigstens einer seiner Seiten umfasst, die ermöglicht, einen Kanal (50) zu begrenzen.

4. Gondel eines Flugzeugs nach Anspruch 3, **dadurch gekennzeichnet, dass** die Nuten (68, 96) einerseits im Bereich einer ersten Kante (80, 98) über Öffnungen (82, 100) ausmünden, die mit dem Kanal (51) in Verbindung stehen, und andererseits im Bereich einer zweiten Kante (76, 92) über Öffnungen (84, 102) ausmünden, die mit der außenseite der Gondel in Verbindung stehen.

5. Gondel eines Flugzeugs nach Anspruch 3 oder 4, **dadurch gekennzeichnet, dass** die Abstützung (52) eine Schulter (86) mit einer Höhe, die im Wesentlichen gleich der Dicke eines ersten Paneels (54) ist, umfasst, welche einen ersten Teil (88) in Form einer zwischen den beiden Paneelen (54, 56) eingefügten, sich wenigstens über die Länge des Überlappungsbereichs der Paneele (54, 56) erstreckenden Platte geringer Dicke, sowie einen zweiten Teil (90) in Form einer Schräge mit einer Kante (92), deren Oberfläche im Bereich der aerodynamischen Fläche der Paneele (54, 56) angeordnet ist, und einer geneigten Fläche (94), gegen die das zweite Paneel (56) gedrückt ist, abgrenzt und dass die Abstützung (52) Nuten (96) lediglich im Bereich der dem ersten Paneel (54) gegenüber liegenden Seite aufweist.
